# DEMANDE DE BREVET EUROPEEN

(11) **EP 4 303 837 A1**
(43) Date de publication de la demande: **10.01.2024**
(21) Numéro de dépôt: 23171018.7
(22) Date de dépôt: 02.05.2023
(51) Int. Cl.: G06V 40/13

(54) **DISPOSITIF DE CAPTURE D'EMPREINTE BIOMÉTRIQUE SANS CONTACT**

(30) Priorité: 07.07.2022 FR 2206995
(71) Demandeur: IDEMIA Identity & Security France, 92400 Courbevoie (FR)
(72) Inventeur: Bezot, Grégoire, 92400 Courbevoie (FR); Le Gouil, Elise, 92400 Courbevoie (FR); Peschaux, Marine, 92400 Courbevoie (FR); Fourre, Joël-Yann, 92400 Courbevoie (FR); Malek, Mokrane, 92400 Courbevoie (FR)
(74) Mandataire: Idemia

(57) **Abrégé**

L'invention porte sur un dispositif sans contact d'empreinte biométrique (1) comprenant une zone utilisateur (10) et un compartiment électronique (20), la zone utilisateur (10) étant adaptée pour recevoir une partie de main d'un utilisateur selon un vecteur d'orientation (V), le compartiment électronique (20) comprenant des moyens d'éclairage et un dispositif de prise de vue (40), le dispositif de prise en vue (40) étant orienté selon un axe optique (A1) faisant un premier angle (B1) avec le vecteur d'orientation (V), les moyens d'éclairage comprenant une source lumineuse (31) orientée selon un axe d'éclairage (A31) tel que la projection (PA31) dudit axe d'éclairage (A31) dans le plan défini par le vecteur d'orientation (V) et l'axe optique (A1) fait un deuxième angle (B31) avec le vecteur d'orientation (V), le premier angle (B1) étant inférieur ou égal à quatre-vingt degrés, le deuxième angle (B31) étant inférieur ou égal à quatre-vingt degrés.

## Description

L'invention concerne le domaine des dispositifs de capture d'empreinte biométrique sans contact, pour l'acquisition d'une empreinte biométrique d'une partie d'une main d'un individu telle que la paume de la main, des doigts de la main, ou la main entière.

Il est connu de l'état de la technique des dispositifs de capture d'empreinte biométrique sans contact, aptes à acquérir une image d'une empreinte de doigts ou de paume d'individu. Le problème des dispositifs sans contact est la présence particulièrement marquée dans l'image d'acquisition de ridules de la peau, introduisant des erreurs lors de l'extraction des caractéristiques biométriques de l'empreinte.

Les dispositifs de capture d'empreinte biométrique avec contact ne sont pas confrontés à ce problème avec la même ampleur car l'appui de la partie de main à imager contre une surface plane telle qu'une vitre, réduit ces ridules de la peau lors de l'acquisition de l'image d'empreinte.

L'invention vise à résoudre les problèmes susmentionnés de l'état de la technique en proposant un dispositif de capture d'empreinte biométrique efficace et simple permettant de réduire la présence des ridules dans l'image acquise par ledit dispositif de capture d'empreinte biométrique.

L'invention porte sur un dispositif de capture sans contact d'empreinte biométrique comprenant une zone utilisateur et un compartiment électronique, la zone utilisateur étant adaptée pour recevoir une partie de main d'un utilisateur dans un plan de positionnement selon un vecteur d'orientation de la main, le compartiment électronique comprenant des moyens d'éclairage et un dispositif de prise de vue apte à acquérir une image d'une empreinte biométrique de ladite partie de main de l'utilisateur, caractérisé en ce que le dispositif de prise en vue est orienté selon un axe optique faisant un premier angle avec le vecteur d'orientation et en ce que les moyens d'éclairage comprennent une source lumineuse orientée selon un axe d'éclairage tel que la projection dudit axe d'éclairage dans le plan défini par le vecteur d'orientation et l'axe optique fait un deuxième angle avec le vecteur d'orientation, le premier angle étant inférieur ou égal à quatre-vingt degrés, le deuxième angle étant une valeur choisie dans un intervalle prédéfini comportant une borne supérieure égale à quatre-vingt degrés.

Selon un aspect de l'invention, la partie de main comprend au moins un doigt, la zone utilisateur étant adaptée pour recevoir ladite partie de main de l'utilisateur de sorte que la direction dudit doigt correspond à la direction du vecteur d'orientation, ledit doigt pointant dans le sens dudit vecteur d'orientation.

Selon un aspect de l'invention, l'intervalle prédéfini comporte une borne inférieure égale à dix degrés.

Selon un aspect de l'invention, le premier angle est compris entre quarante degrés et soixante-quinze degrés.

Selon un aspect de l'invention, les moyens d'éclairage comprenant une pluralité de sources lumineuses, chaque source lumineuse étant orientée selon un axe d'éclairage tel que la projection dudit axe d'éclairage dans le plan défini par le vecteur d'orientation et l'axe optique fait un deuxième angle avec le vecteur d'orientation, chaque deuxième angle étant une valeur choisie dans l'intervalle prédéfini.

Selon un aspect de l'invention, les sources lumineuses de la pluralité de sources lumineuses sont disposées à égale distance du dispositif de prise de vue.

Selon un aspect de l'invention, le plan de positionnement est incliné par rapport à un plan horizontal d'un angle d'inclinaison prédéfini, selon un axe d'inclinaison perpendiculaire au vecteur d'orientation.

Selon un aspect de l'invention, la différence entre l'angle d'inclinaison et un angle complémentaire au premier angle est inférieure à dix degrés.

Selon un aspect de l'invention, l'angle d'inclinaison est inférieur à dix degrés.

Selon un aspect de l'invention, le dispositif de prise en vue est apte à acquérir une image de ladite partie de main de l'utilisateur selon un plan de focalisation parallèle au plan de positionnement.

Selon un aspect de l'invention, le compartiment électronique comprend un calculateur apte à corriger des distorsions dans une image acquise par le dispositif de prise de vue.

D'autres avantages et caractéristiques de l'invention apparaîtront à la lecture de la description et des dessins.
La figure 1a représente un dispositif de capture d'empreinte biométrique sans contact selon un premier exemple de réalisation.
La figure 1b représente le dispositif de capture d'empreinte biométrique sans contact de la figure 1a, en cours d'utilisation par un utilisateur.
La figure 2 représente un dispositif de capture d'empreinte biométrique sans contact selon un deuxième exemple de réalisation, en cours d'utilisation par un utilisateur.
La figure 3a représente la main d'un utilisateur dans un plan de positionnement d'un dispositif de capture et selon un vecteur d'orientation, vue du dessous.
La figure 3b représente la main d'un utilisateur dans un plan de positionnement d'un dispositif de capture et selon un vecteur d'orientation, en perspective.
La figure 4 représente un dispositif de capture d'empreinte biométrique selon un mode de réalisation d'encombrement horizontal.
La figure 5 représente un dispositif de capture d'empreinte biométrique selon un mode de réalisation d'encombrement vertical et selon une première variante.
La figure 6 représente un dispositif de capture d'empreinte biométrique selon un mode de réalisation d'encombrement vertical et selon une deuxième variante.
La figure 7 représente un dispositif de capture d'empreinte biométrique selon un mode de réalisation compact.
La figure 8a représente un dispositif de capture d'empreinte biométrique selon un premier mode d'utilisation.
La figure 8b représente un dispositif de capture d'empreinte biométrique selon un deuxième mode d'utilisation.
La figure 8c représente un dispositif de capture d'empreinte biométrique selon un troisième mode d'utilisation.

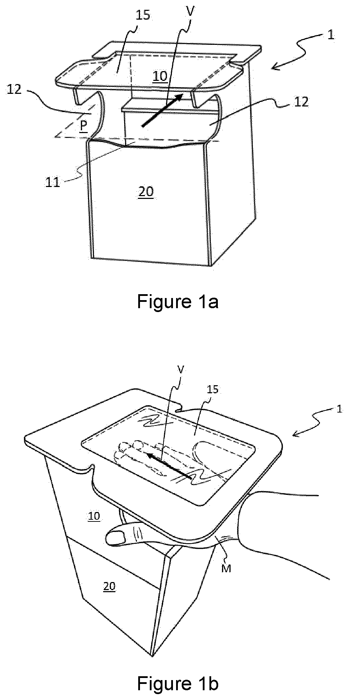

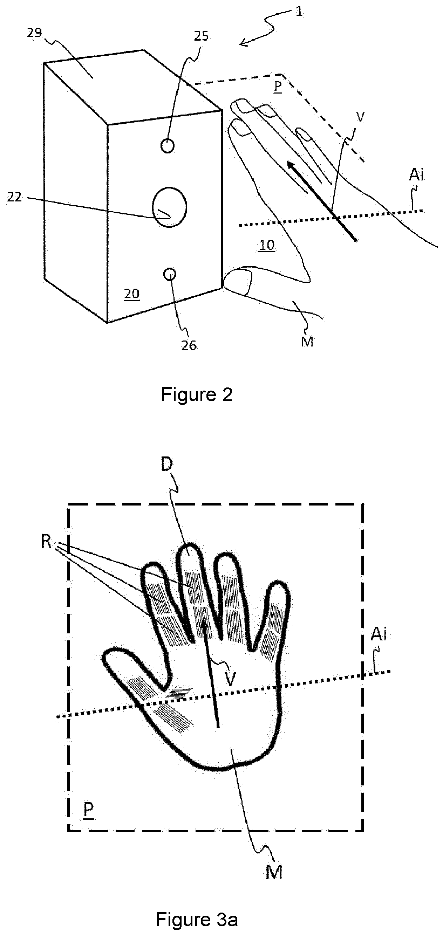

Les figures 1a, 1b et 2 illustrent un dispositif de capture d'empreinte biométrique 1 apte à faire une acquisition d'une image d'une empreinte d'une partie d'une main d'un utilisateur, par exemple la paume d'une main, d'un ou de plusieurs doigts d'une main, ou de la main entière.

Une main d'utilisateur comprend en sa surface intérieure un réseau de crêtes et/ou sillons qui correspondent à une empreinte biométrique, et des ridules de la peau dans la description ci-après.

Les ridules sont des plis de la peau localisée sur les doigts ou la paume d'une main, autre que les plis interphalanges.

Le dispositif de capture d'empreinte biométrique 1 permet de générer une image mettant en exergue ladite empreinte biométrique tout en réduisant la visibilité des ridules de la peau.

Le dispositif de capture d'empreinte biométrique 1 comprend une zone utilisateur 10 et un compartiment électronique 20.

Selon un premier exemple de réalisation illustré sur les figures 1a et 1b, la zone utilisateur 10 comprend un compartiment utilisateur.

Le dispositif de capture d'empreinte biométrique 1 peut comprendre un seul bloc sensiblement parallélépipédique comportant des parois communes au compartiment utilisateur et au compartiment électronique 20 ou bien être un assemblage d'un bloc physique de compartiment utilisateur et d'un bloc physique de compartiment électronique différent.

Le compartiment utilisateur et le compartiment électronique 20 peuvent être cloisonnés l'un par rapport à l'autre, par exemple par une vitre de séparation. La vitre de séparation peut se trouver à la jonction de deux compartiments physiques différents, ou localisée dans un compartiment parmi le compartiment utilisateur et le compartiment électronique 20. La vitre de séparation peut être avantageusement orientée pour limiter des reflets ou faciliter son nettoyage.

Le compartiment utilisateur et le compartiment électronique 20 peuvent être ouverts l'un sur l'autre tel que représenté en figure 1a, sans cloison physique entre les deux.

Le compartiment utilisateur comprend au moins une ouverture pour le passage de la partie de main dont l'empreinte biométrique doit être imagée.

Par exemple, le compartiment utilisateur comprend une ouverture frontale 11 permettant le passage d'une main depuis l'extrémité des doigts jusqu'au poignet, selon une direction dite longitudinale.

Par exemple, le compartiment utilisateur comprend en outre deux ouvertures latérales 11 permettant le passage d'une main depuis le pouce jusqu'à l'auriculaire ou depuis l'auriculaire jusqu'au pouce, selon une direction dite latérale.

La figure 1b illustre le dispositif de capture de la figure 1a, en cours d'utilisation par un utilisateur. La main M de l'utilisateur est positionnée dans la zone utilisateur 10 en vue d'une acquisition biométrique d'une partie de main comprenant les doigts index, majeur, annulaire et auriculaire.

Avantageusement, ledit compartiment utilisateur comporte sur une face extérieure 15 une portion transparente pour permettre à l'utilisateur de positionner la partie de main dont l'empreinte biométrique doit être imagée, selon un plan de positionnement P.

La partie de main dont l'empreinte biométrique doit être imagée doit être tournée vers le compartiment électronique 20.

Le compartiment électronique 20 comprend des moyens d'éclairage aptes à générer au moins un faisceau lumineux en direction de la zone utilisateur 10 et un dispositif de prise de vue 40 apte à acquérir une image de ladite partie de main de l'utilisateur.

Selon un deuxième exemple de réalisation illustré sur la figure 2, la zone utilisateur 10 est totalement ouverte et ne comprend aucune délimitation physique.

Le compartiment électronique 20 comprend des moyens d'éclairage aptes à générer au moins un faisceau lumineux en direction de la zone utilisateur 10 et un dispositif de prise de vue 40 apte à acquérir une image de ladite partie de main de l'utilisateur.

Le compartiment électronique 20 comprend un premier orifice 22 permettant une prise de vue par le dispositif de prise de vue 40, vers la zone utilisateur 10.

Par exemple, le compartiment électronique 20 comprend deux deuxièmes orifices 25, 26 permettant le passage de deux faisceaux lumineux en provenance des moyens d'éclairage, vers la zone utilisateur 10. Cet exemple est illustré sur la figure 2 et n'est pas limitatif.

Par exemple, le compartiment électronique 20 comprend un anneau de deuxièmes orifices permettant le passage d'une pluralité de faisceaux lumineux en provenance des moyens d'éclairage, vers la zone utilisateur 10.

Par exemple, le compartiment électronique 20 comprend un seul deuxième orifice permettant le passage d'un faisceau lumineux en provenance des moyens d'éclairage, vers la zone utilisateur 10.

Quel que soit l'exemple de réalisation, avec ou sans compartiment utilisateur, la zone utilisateur 10 est adaptée pour recevoir ladite partie de main de l'utilisateur selon un plan de positionnement P prédéterminé et selon un vecteur d'orientation V prédéterminé, en vue d'une capture d'empreinte biométrique par le compartiment électronique 20.

Par exemple, le plan de positionnement P est matérialisé par un hologramme.

Par exemple, le plan de positionnement P correspond à un positionnement correct de la partie de la main validé par le dispositif de capture d'empreinte biométrique 1, par un message vocal ou écrit, ou par un indicateur.

Par exemple, dans le cas où la zone utilisateur 10 comprend un compartiment utilisateur, le plan de positionnement P est induit par la forme dudit compartiment utilisateur.

Par exemple, le plan de positionnement P est induit par les caractéristiques d'une face extérieure 15 dudit compartiment utilisateur. Une inclinaison de la face extérieure 15 induit un plan de positionnement de même inclinaison. Une face extérieure 15 horizontale induit un plan de positionnement horizontal.

Par exemple, dans le cas où la zone utilisateur 10 est totalement ouverte, le plan de positionnement P est induit par la forme ou l'inclinaison d'une face 29 du compartiment électronique 20.

Par exemple, le plan de positionnement P est horizontal, comme illustré en figure 1a.

Par exemple, le plan de positionnement P est incliné par rapport à un plan horizontal selon un axe d'inclinaison Ai perpendiculaire au vecteur d'orientation V.

Par exemple, le plan de positionnement P est incliné tel que le vecteur d'orientation V est orienté vers le haut, comme illustré figure 2.

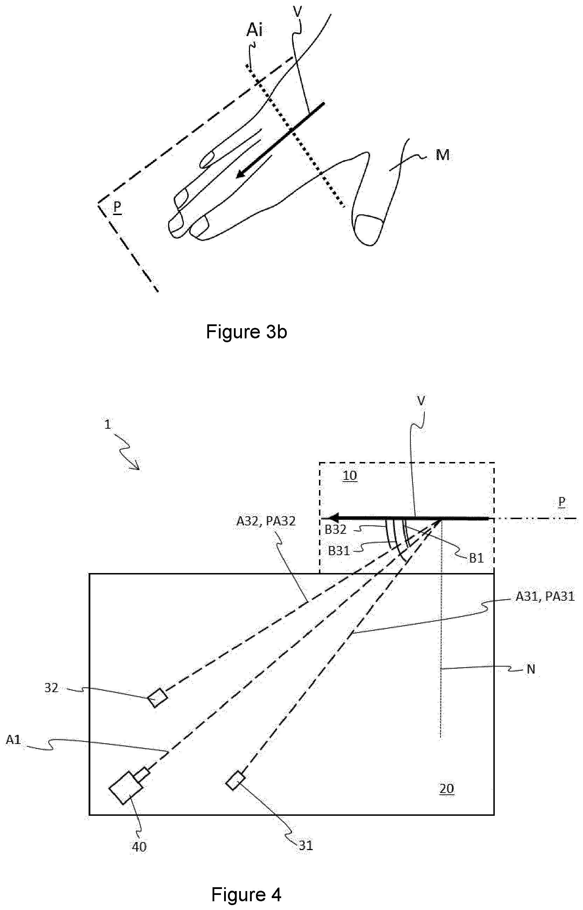

Par exemple, le plan de positionnement P est incliné tel que le vecteur d'orientation V est orienté vers le bas, comme illustré figure 3b.

La figure 3a illustre une main, vue de dessous, localisée dans le plan de positionnement P et orientée selon le vecteur d'orientation V.

La main comprend des ridules R.

Les ridules R des doigts D sont principalement orientées pour chaque doigt D selon une direction longitudinale dudit doigt D.

L'orientation des ridules R de la paume de la main est moins uniforme.

La figure 3b illustre une main, selon une vue en perspective, localisée dans le plan de positionnement P et orientée selon le vecteur d'orientation V.

Le plan de positionnement P est incliné par rapport à un plan horizontal selon un axe d'inclinaison Ai perpendiculaire au vecteur d'orientation V. Le vecteur d'orientation V appartenant au plan de positionnement P est orienté vers le bas.

Le but de l'invention est de proposer un agencement du dispositif de prise de vue 40 et des moyens d'éclairage au sein du compartiment électronique 20, permettant une acquisition d'une image d'empreinte d'une partie de main réduisant les ridules R de ladite partie de main, lorsque ladite partie de main est positionnée dans le plan de positionnement P du dispositif de capture 1 associé, selon le vecteur d'orientation V de la main.

Les figures 4, 5, 6 et 7 illustrent plusieurs modes de réalisation du dispositif de capture 1 selon l'invention.

Quel que soit le mode de réalisation, pour que l'effet de réduction de ridules soit significatif, l'agencement doit être tel que :
- le dispositif de prise en vue 40 est orienté selon un axe optique A1 faisant un premier angle B1 avec le vecteur d'orientation V,
- les moyens d'éclairage comprennent une source lumineuse 31 orientée selon un axe d'éclairage A31 tel que la projection PA31 dudit axe d'éclairage A31 dans le plan défini par le vecteur d'orientation V et l'axe optique A1 fait un deuxième angle B31 avec le vecteur d'orientation V,
- le premier angle B1 est inférieur ou égal à quatre-vingt degrés,
- le deuxième angle B31 est une valeur choisie dans un intervalle prédéfini comportant une borne supérieure égale à quatre-vingt degrés.

Ainsi, tout comme le premier angle B1, le deuxième angle B31 est inférieur ou égal à quatre-vingt degrés.

Le deuxième angle B31 est défini en fonction d'un intervalle prédéfini pour faciliter ci-après l'introduction d'un cas avantageux selon lequel ledit deuxième angle est éloigné de zéro. Cela permet également de ne pas faire de confusion entre les contraintes associées aux premier et deuxième angles B1, B31.

En effet, l'intervalle prédéfini comporte avantageusement une borne inférieure égale à dix degrés. Cela évite un risque d'éclairage du plan de positionnement P par le dessus, le dessous du plan de positionnement P étant la partie faisant face au compartiment électronique 20.

Selon ce cas avantageux donc, le deuxième angle B31 est inférieur ou égal à quatre-vingt degrés, et est supérieur ou égal à dix degrés. Autrement dit, le deuxième angle B31 est compris entre dix degrés et quatre-vingt degrés.

De préférence, le premier angle B1 est compris entre quarante degrés et soixante-quinze degrés.

Dans le plan défini par le vecteur d'orientation V et l'axe optique A1, le vecteur d'orientation V comprend une normale N qui sépare le compartiment utilisateur en une première partie comprenant la projection du dispositif de prise de vue 40 et des moyens d'éclairage et une deuxième partie dépourvue de la projection du dispositif de prise de vue 40 et des moyens d'éclairage.

Pour que l'effet de réduction de ridules soit significatif, il faut que les moyens d'éclairage émettent des rayons lumineux qui, lorsqu'ils atteignent une ridule R, soient majoritairement réfléchis vers la deuxième partie du compartiment utilisateur, le dispositif de prise de vue 40 ne les recevant donc pas. Au contraire, il faut que les moyens d'éclairage émettent des rayons lumineux qui, lorsqu'ils atteignent une crête d'empreinte biométrique, soient réfléchis vers la première partie du compartiment utilisateur, en particulier réfléchis principalement vers le dispositif de prise de vue 40. L'agencement précédemment décrit permet de réaliser l'effet recherché.

Les moyens d'éclairage peuvent comporter une seule source lumineuse 31 ou une pluralité de sources lumineuse 31, 32.

Une source lumineuse 31, 32 peut être une source lumineuse étendue ou ponctuelle.

Une source lumineuse 31, 32 peut avoir un angle de diffusion large ou concentré.

Lorsque les moyens d'éclairage comprennent une pluralité de sources lumineuses, chaque source lumineuse 31, 32 est orientée selon un axe d'éclairage A31, A32 tel que la projection PA31, PA32 dudit axe d'éclairage A31, A32 dans le plan défini par le vecteur d'orientation V et l'axe optique A1 fait un deuxième angle B31, B32 avec le vecteur d'orientation V, chaque deuxième angle B31, B32 étant une valeur choisie dans l'intervalle prédéfini.

Par exemple, les deuxièmes angles sont égaux entre eux.

Par exemple, les sources lumineuses 31, 32 sont disposées à égale distance du dispositif de prise de vue 40.

Par exemple, les sources lumineuses 31, 32 sont disposées en anneau autour du dispositif de prise de vue 40.

Le dispositif de capture 1 peut comprendre un dispositif de prise de vue additionnel, par exemple pour permettre à un calculateur du compartiment électronique 20 une reconstruction de la partie de main de l'utilisateur en trois dimensions.

Avantageusement, le dispositif de prise en vue 40 est apte à acquérir une image d'une partie de main d'un l'utilisateur selon un plan de focalisation parallèle au plan de positionnement P.

Le dispositif de prise de vue 40 comprend un objectif et un capteur.

Le capteur comprend la surface photosensible du dispositif de prise de vue.

Par exemple, l'objectif est incliné par rapport à l'axe optique du dispositif de prise de vue.

Par exemple, le capteur est incliné par rapport à l'axe optique.

Par exemple, le capteur est décentré par rapport à l'objectif.

Avantageusement, le compartiment électronique 10 comprend un calculateur apte à corriger des distorsions dans une image acquise par le dispositif de prise de vue 40.

Selon un mode de réalisation d'encombrement horizontal illustré sur la figure 4, le plan de positionnement P est sensiblement horizontal. Le plan de positionnement P est incliné par rapport à un plan horizontal, d'un angle d'inclinaison B2 inférieur à dix degrés, selon un axe d'inclinaison Ai perpendiculaire au vecteur d'orientation V. L'axe d'éclairage A1 du dispositif de prise de vue 40 est dit oblique.

Le mode de réalisation d'encombrement horizontal est par exemple adapté pour l'acquisition d'empreinte d'un conducteur ou d'un passager d'un véhicule.

Le dispositif de capture 1 de la figure 4 ne comprend pas de compartiment utilisateur. La zone utilisateur 10 est délimitée par des pointillés.

Cet exemple n'est pas limitatif. Un dispositif de capture 1 selon le mode de réalisation d'encombrement horizontal peut comprendre un compartiment utilisateur.

Sur la figure 4, les moyens d'éclairage comprennent une première source lumineuse 31 et une deuxième source lumineuse 32. Pour des raisons pratiques d'illustration, le dispositif de prise de vue 40 et les sources lumineuses 31, 32 sont localisés dans le plan défini par le vecteur d'orientation V et l'axe optique A1 tel que les axes d'éclairage A31, A32 des sources lumineuses 31, 32 et l'axe optique A1 appartiennent à un même plan. Ainsi, l'axe d'éclairage A31 de la première source lumineuse 31 est confondu avec sa projection PA31 dans le plan défini par le vecteur d'orientation V et l'axe optique A1. De même, l'axe d'éclairage A32 de la deuxième source lumineuse 32 est confondu avec sa projection PA32 dans le plan défini par le vecteur d'orientation V et l'axe optique A1.

Cet exemple n'est pas limitatif. Un dispositif de capture 1 selon le mode de réalisation d'encombrement horizontal peut comporter des moyens d'éclairage comprenant une unique source lumineuse 31 ou plus de deux sources lumineuses. Les moyens d'éclairage peuvent ne pas être localisés dans le plan défini par le vecteur d'orientation V et l'axe optique A1.

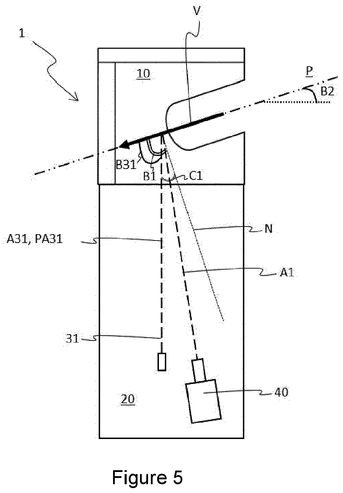

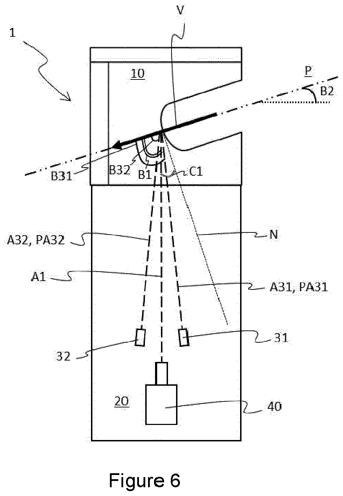

Selon un mode de réalisation d'encombrement vertical illustré sur les figures 5 et 6, l'axe optique A1 du dispositif de prise de vue 40 est sensiblement vertical. Le plan de positionnement P est incliné par rapport à un plan horizontal d'un angle d'inclinaison B2 tel que la différence entre l'angle d'inclinaison B2 et un angle complémentaire C1 au premier angle B1 est inférieure à dix degrés.

Un dispositif tel que représenté sur les figures 1a et 1b est par exemple adapté au mode de réalisation d'encombrement vertical.

Le mode de réalisation d'encombrement vertical est par exemple adapté pour l'acquisition d'empreinte d'un utilisateur en position debout, par exemple à l'entrée d'une zone à accès restreint tel qu'un bâtiment ou d'une partie d'un bâtiment.

Le dispositif de capture 1 des figures 5 et 6 comprend un compartiment utilisateur délimitant la zone utilisateur 10.

Cet exemple n'est pas limitatif. Un dispositif de capture 1 selon le mode de réalisation d'encombrement vertical peut ne pas comprendre de compartiment utilisateur.

Selon une première variante illustrée sur la figure 5, les moyens d'éclairage comprennent une source lumineuse 31. Pour des raisons pratiques d'illustration, le dispositif de prise de vue 40 et la source lumineuse 31 sont localisés dans le plan défini par le vecteur d'orientation V et l'axe optique A1 tel que l'axe d'éclairage A31 de la source lumineuse 31 et l'axe optique A1 appartiennent à un même plan. Ainsi, l'axe d'éclairage A31 de la première source lumineuse 31 est confondu avec sa projection PA31 dans le plan défini par le vecteur d'orientation V et l'axe optique A1.

Selon une deuxième variante illustrée sur la figure 6, les moyens d'éclairage comprennent une première source lumineuse 31 et une deuxième source lumineuse 32. Pour des raisons pratiques d'illustration, le dispositif de prise de vue 40 et les sources lumineuses 31, 32 sont localisés dans le plan défini par le vecteur d'orientation V et l'axe optique A1 tel que les axes d'éclairage A31, A32 des sources lumineuses 31, 32 et l'axe optique A1 appartiennent un même plan. Ainsi, l'axe d'éclairage A31 de la première source lumineuse 31 est confondu avec sa projection PA31 dans le plan défini par le vecteur d'orientation V et l'axe optique A1. De même, l'axe d'éclairage A32 de la deuxième source lumineuse 32 est confondu avec sa projection PA32 dans le plan défini par le vecteur d'orientation V et l'axe optique A1.

Ces exemples ne sont pas limitatifs. Un dispositif de capture 1 selon le mode de réalisation d'encombrement vertical peut comporter des moyens d'éclairage comprenant plus de deux sources lumineuses. Les moyens d'éclairage peuvent ne pas être localisés dans le plan défini par le vecteur d'orientation V et l'axe optique A1.

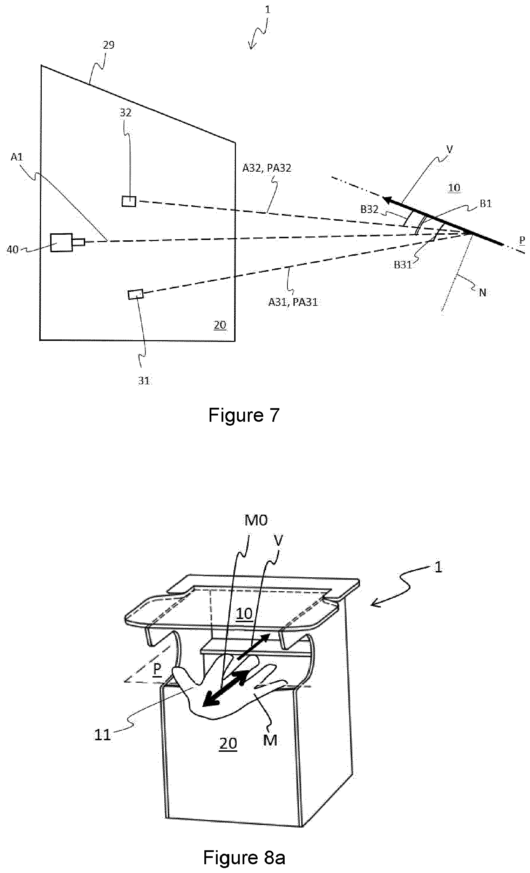

Selon un mode de réalisation compact illustré sur la figure 7, l'axe optique A31 est sensiblement horizontal. Le dispositif de capture 1 ne comprend pas de compartiment utilisateur. Le plan de positionnement P est incliné par rapport à un plan horizontal d'un angle d'inclinaison B2 tel que la différence entre l'angle d'inclinaison B2 et le premier angle B1 est inférieure à dix degrés.

Un dispositif tel que représenté sur la figure 2 est par exemple adapté au mode de réalisation compact.

Sur la figure 7, les moyens d'éclairage comprennent une première source lumineuse 31 et une deuxième source lumineuse 32. Pour des raisons pratiques d'illustration, le dispositif de prise de vue 40 et les sources lumineuses 31, 32 sont localisés dans le plan défini par le vecteur d'orientation V et l'axe optique A1 tel que les axes d'éclairage A31, A32 des sources lumineuses 31, 32 et l'axe optique A1 appartiennent à un même plan. Ainsi, l'axe d'éclairage A31 de la première source lumineuse 31 est confondu avec sa projection PA31 dans le plan défini par le vecteur d'orientation V et l'axe optique A1. De même, l'axe d'éclairage A32 de la deuxième source lumineuse 32 est confondu avec sa projection PA32 dans le plan défini par le vecteur d'orientation V et l'axe optique A1.

Cet exemple n'est pas limitatif. Un dispositif de capture 1 selon le mode de réalisation compact peut comporter des moyens d'éclairage comprenant une unique source lumineuse 31 ou plus de deux sources lumineuses, par exemple disposées en anneau autour du dispositif de prise de vue 40. Les moyens d'éclairage peuvent ne pas être localisés dans le plan défini par le vecteur d'orientation V et l'axe optique A1.

Le mode de réalisation compact est par exemple adapté pour l'acquisition nomade d'empreinte d'un utilisateur, par exemple par des forces de l'ordre, pour une utilisation en tout lieu.

Le dispositif de capture 1 comprend plusieurs possibilités de réalisation, combinables les unes avec les autres de manière indépendantes :
- la zone utilisateur 10 est délimitée ou non par un compartiment utilisateur,
- le compartiment électronique 20 comprend une ou plusieurs sources lumineuses 31, 32,
- le compartiment électronique 20 comprend ou non un dispositif de prise de vue additionnel,
- l'axe optique A31 du dispositif de prise de vue 40 est sensiblement horizontal, vertical ou oblique.

Certaines de ces combinaisons ont été décrites et sont illustrées dans ce document. L'homme du métier saura réaliser les autres sans difficulté.

Le dispositif de capture de l'invention peut être utilisé pour une acquisition de partie de main comprenant un ou plusieurs doigts D, par exemple une acquisition d'un doigt D, de plusieurs doigts D, d'une main complète.

La zone utilisateur 10 est adaptée pour recevoir ladite partie de main de l'utilisateur comprenant au moins un doigt D de sorte que la direction dudit doigt D correspond à la direction du vecteur d'orientation V, ledit doigt D pointant dans le sens dudit vecteur d'orientation V tel que par exemple illustré sur les figures 1b, 2, 3a et 3b.

Lorsque la main est positionnée dans la zone utilisateur 10 en vue d'une acquisition d'image d'empreinte biométrique, le vecteur d'orientation V passe par un doigt D de la main et est orienté depuis la paume de la main vers une extrémité libre dudit doigt D (l'extrémité comprenant généralement un ongle).

Le dispositif de capture de l'invention peut être utilisé pour une acquisition de paume de main. Les ridules d'une paume de main étant orientées de manière moins homogène que les ridules d'un doigt, il est avantageux d'effectuer plusieurs acquisitions selon plusieurs vecteurs d'orientation V pour réduire sur les images acquises des ridules orientées très différemment les unes des autres.

Par exemple, un traitement par fusion sélective des différentes images par un calculateur permet de générer à partir desdites images, une image de paume dans laquelle les ridules sont réduites, quelle que soit leur orientation.

Concernant l'ergonomie pour l'acquisition par le dispositif de capture, on peut citer trois modes d'utilisation.

Selon un premier mode d'utilisation illustré sur la figure 8a, l'acquisition par le dispositif de prise de vue 40 du dispositif de capture 1 est effectuée alors que l'utilisateur introduit sa partie de main dans la zone utilisateur 10 selon une direction longitudinale allant du poignet jusqu'à une extrémité des doigts.

Par exemple, la zone utilisateur 10 est adaptée pour recevoir une partie de main comprenant au moins un doigt D de sorte que la direction dudit doigt D correspond à la direction du vecteur d'orientation V, ledit doigt D pointant dans le sens dudit vecteur d'orientation V. Dans cet exemple, la main pour entrer et sortir de la zone utilisateur 10 suit un mouvement M0 d'aller-retour sensiblement parallèle au vecteur d'orientation V, dans le plan de positionnement P.

Les dispositifs réalisés selon le mode de réalisation vertical ou horizontal conviennent bien au premier mode d'utilisation.

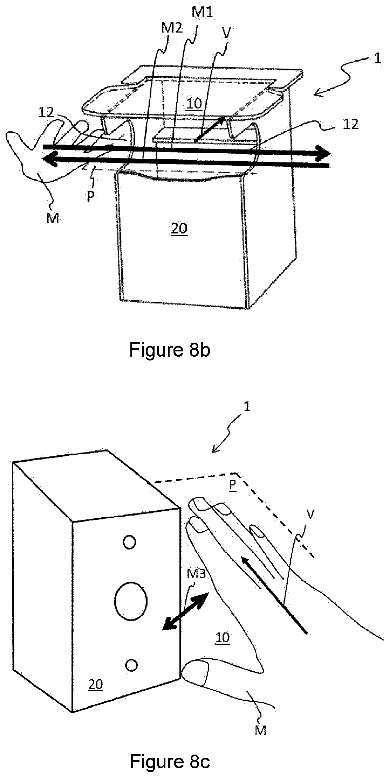

Selon un deuxième mode d'utilisation illustré sur la figure 8b, l'acquisition par le dispositif de prise de vue 40 du dispositif de capture 1 est effectuée alors que l'utilisateur introduit sa partie de main dans la zone utilisateur 10 selon une direction latérale allant du pouce jusqu'à l'auriculaire.

Par exemple, la zone utilisateur 10 est adaptée pour recevoir une partie de main comprenant au moins un doigt D de sorte que la direction dudit doigt D correspond à la direction du vecteur d'orientation V, ledit doigt D pointant dans le sens dudit vecteur d'orientation V. Dans cet exemple, le mouvement de la main pour entrer et sortir de la zone utilisateur suit un vecteur de mouvement M1, M2 sensiblement perpendiculaire au vecteur d'orientation V, dans le plan de positionnement P.

Les dispositifs réalisés selon le mode de réalisation vertical ou horizontal conviennent bien au deuxième mode d'utilisation.

Selon un troisième mode d'utilisation illustré sur la figure 8c, l'acquisition par le dispositif de prise de vue 40 est effectuée alors que l'utilisateur approche et éloigne sa main du compartiment électronique 20 du dispositif de capture 1 selon un mouvement M3 suivant une direction perpendiculaire au plan de positionnement P, passant par un positionnement de ladite main dans le plan de positionnement P au sein de la zone utilisateur 10.

Dans ce mode de réalisation, l'utilisateur doit être bien guidé, par exemple par un opérateur.

Les dispositifs réalisés selon le mode de réalisation compact conviennent bien au troisième mode d'utilisation.

De manière plus générale, les dispositifs sans compartiment utilisateur conviennent bien au troisième mode d'utilisation.

## Revendications

1. Dispositif de capture (1) sans contact d'empreinte biométrique comprenant une zone utilisateur (10) et un compartiment électronique (20), la zone utilisateur (10) étant adaptée pour recevoir une partie de main d'un utilisateur dans un plan de positionnement (P) selon un vecteur d'orientation (V) de la main, le compartiment électronique (20) comprenant des moyens d'éclairage et un dispositif de prise de vue (40) apte à acquérir une image d'une empreinte biométrique de ladite partie de main de l'utilisateur, **caractérisé en ce que** le dispositif de prise en vue (40) est orienté selon un axe optique (A1) faisant un premier angle (B1) avec le vecteur d'orientation (V) et **en ce que** les moyens d'éclairage comprennent une source lumineuse (31) orientée selon un axe d'éclairage (A31) tel que la projection (PA31) dudit axe d'éclairage (A31) dans le plan défini par le vecteur d'orientation (V) et l'axe optique (A1) fait un deuxième angle (B31) avec le vecteur d'orientation (V), le premier angle (B1) étant inférieur ou égal à quatre-vingt degrés, le deuxième angle (B31) étant une valeur choisie dans un intervalle prédéfini comportant une borne supérieure égale à quatre-vingt degrés.

2. Dispositif de capture (1) selon revendication précédente, la partie de main comprenant au moins un doigt (D), la zone utilisateur (10) étant adaptée pour recevoir ladite partie de main de l'utilisateur de sorte que la direction dudit doigt correspond à la direction du vecteur d'orientation (V), ledit doigt pointant dans le sens dudit vecteur d'orientation (V).

3. Dispositif de capture (1) selon l'une quelconque des revendications précédentes, l'intervalle prédéfini comportant une borne inférieure égale à dix degrés.

4. Dispositif de capture (1) selon l'une quelconque des revendications précédentes, le premier angle (B1) étant compris entre quarante degrés et soixante-quinze degrés.

5. Dispositif de capture (1) selon l'une quelconque des revendications précédentes, les moyens d'éclairage comprenant une pluralité de sources lumineuses, chaque source lumineuse (31, 32) étant orientée selon un axe d'éclairage (A31, A32) tel que la projection (PA31, PA32) dudit axe d'éclairage (A31, A32) dans le plan défini par le vecteur d'orientation (V) et l'axe optique (A1) fait un deuxième angle (B31, B32) avec le vecteur d'orientation (V), chaque deuxième angle (B31, B32) étant une valeur choisie dans l'intervalle prédéfini.

6. Dispositif de capture (1) selon l'une quelconque des revendications précédentes, le plan de positionnement (P) étant incliné par rapport à un plan horizontal d'un angle d'inclinaison prédéfini (B2), selon un axe d'inclinaison (Ai) perpendiculaire au vecteur d'orientation (V).

7. Dispositif de capture (1) selon la revendication précédente, la différence entre l'angle d'inclinaison (B2) et un angle complémentaire (C1) au premier angle (B1) étant inférieure à dix degrés.

8. Dispositif de capture (1) selon la revendication 6, l'angle d'inclinaison (B2) étant inférieur à dix degrés.

9. Dispositif de capture (1) selon l'une quelconque des revendications précédentes, le dispositif de prise en vue (40) étant apte à acquérir une image de ladite partie de main de l'utilisateur selon un plan de focalisation parallèle au plan de positionnement (P).

10. Dispositif de capture (1) selon l'une quelconque des revendications précédentes, le compartiment électronique (10) comprenant un calculateur apte à corriger des distorsions dans une image acquise par le dispositif de prise de vue (40).
